# FASCICULE DE BREVET EUROPEEN

(11) **EP 2 153 739 B1**
(45) Date de publication et mention de la délivrance du brevet: **03.10.2012**
(21) Numéro de dépôt: 09167381.4
(22) Date de dépôt: 06.08.2009
(51) Int. Cl.: A41C 3/00, A41C 5/00, B29C 51/00

(54) **Soutien-gorge multicouche incorporant une couche de TPE et son procédé de fabrication**
Mehrschichten-Büstenhalter mit einer Schicht aus TPE-Material und sein Herstellungsverfahren
Multi-layer bra including one layer of TPE and method of manufacturing same

(30) Priorité: 11.08.2008 FR 0804552
(43) Date de publication de la demande: 17.02.2010
(73) Titulaire: Dbapparel Operations, 92500 Rueil Malmaison (FR)
(72) Inventeur: Saunier, Christiane Monique, 71400, Autun (FR); Pilawa, Gilles Roger, 71360, Saint Léger du Bois (FR); Guyot, Aurélie- Noémie - Geneviève, 71400, Autun (FR)
(74) Mandataire: Bertrand, Didier

(56) Documents cités:
- EP-A- 1 302 118
- WO-A-2004/002248
- WO-A-2007/031650
- US-A1- 2002 106 970
- US-A1- 2004 097 151

## Description

La présente invention concerne un article de lingerie, plus précisément un soutien-gorge multicouche et son procédé de fabrication.

On connaît déjà des articles de lingerie, notamment des soutiens-gorge, réalisés sous forme d'un empilement de couches contrecollées, comprenant généralement au moins une couche textile avantageusement en maille, et au moins une couche d'une matière plastique. Ces couches, et notamment les couches intermédiaires, peuvent ne s'étendre que sur une partie de la surface de l'article, par exemple pour conférer des propriétés localisées de renforcement ou d'élasticité. Le document WO 2007/031650 appartenant à la Demanderesse fait connaître un tel article monopièce multicouche comportant deux couches textiles respectivement intérieure et extérieure entre lesquelles sont prévues des couches intermédiaire en silicone ainsi qu'une couche de textile tridimensionnel (en anglais « spacer fabric »). Le silicone apporte de grands avantages en termes d'élasticité et donc de confort, par rapport à certaines couches de matière thermoplastiques qui avaient été utilisées dans l'art antérieur pour former un support efficace à la poitrine. Néanmoins, en particulier pour les fortes poitrines, le support conféré par le silicone peut s'avérer insuffisant ou nécessiter une épaisseur de silicone excessive.

Le but de la présente invention est de proposer un article qui ne présente pas ces inconvénients et convienne bien pour la fabrication d'un soutien-gorge, y compris pour les fortes poitrines.

L'invention atteint son but grâce à un soutien-gorge, réalisé par thermoformage d'un empilement de couches contrecollées comprenant au moins une couche textile et au moins une couche en thermoplastique élastomère (TPE) contrecollée à une couche adjacente, **caractérisé en ce que** le TPE est choisi et apporté en feuille sous forme d'un motif de renforcement d'une épaisseur comprise entre 100 et 500 µm..

Par contrecollée, on entend que les surfaces des deux couches associées sont attachées l'une à l'autre, au moins par points ou lignes selon une densité importante, ou de manière sensiblement continue, de sorte que les deux couches sont sensiblement partout solidaires l'une de l'autre dans la région de contrecollage. Le contrecollage peut être obtenu par une couche de colle ou bien par la fusion directe partielle de la couche de TPE et/ou de la couche textile sur l'autre couche.

Par motif de renforcement, on entend que le TPE par le choix de sa matière et de l'endroit du soutien-gorge où il est apporté permet de renforcer le soutien-gorge, c'est-à-dire d'améliorer son rôle de soutien de la poitrine.

L'invention concerne donc un empilement de couches moulées selon une forme tridimensionnelle arrondie pour former des bonnets de soutien-gorge. Grâce à l'emploi du TPE apporté sous forme d'une couche du complexe multicouche, il est possible d'apporter au produit fini (l'article de lingerie) des propriétés particulièrement intéressantes en termes de soutien et de forme.

En effet, les TPE forment un groupe d'élastomères réunissant les qualités des élastomères et des thermoplastiques, grâce au caractère réversible de leur durcissement/ramollissement : les TPE présentent donc à la fois des propriétés élastiques et une aptitude à être thermoformés ou moulés.

Pour des températures inférieures à un certain seuil (la température de ramollissement qui peut être en fait une plage de ramollissement), par exemple 100°C, les TPE se comportent comme les élastomères à base de caoutchouc et possèdent donc une bonne élasticité, une excellente résistance à la traction, une déformation rémanente après compression relativement faible et une bonne flexibilité à froid.

Pour des températures supérieures audit seuil, les TPE se comportent comme des thermoplastiques, ce qui signifie qu'ils se déforment et sont façonnables sous l'action de la chaleur ; mais ils redeviennent élastomères en refroidissant.

Les TPE qui conviennent à l'invention rentrent dans plusieurs familles et comprennent notamment :
- des ensembles de copolymères : EVA, polyétherester, polyuréthanne thermoplastique, polyétheramide, etc.
- des ensembles de copolymères styréniques : SBS, SIS, SEBS, SEPS, etc, qui cependant ne se moulent pas en feuilles.
- des mélanges composés : EPDM/polypropylène, NBR/polypropylène, EVA/PVDC, NR/polypopylène, etc.

Certains de ces TPE sont commercialisés sous les marques Hytrel, Alcryn, Elvax, Pebax, Arnitel, Solprene, Cariflex, Desmopan, Geoplast.

Toutefois, les TPE préférés selon l'invention sont ceux qui peuvent être utilisés en feuilles.

Certains TPE ont déjà été utilisés dans des articles de lingerie, par exemple dans la fabrication de certaines fibres destinées à la lingerie, ou pour fabriquer des bretelles transparentes en polyuréthanne thermoplastique dit couramment TPU (US 6283821). On connaît aussi l'utilisation de TPU en film servant à faire des enveloppes pour soutien-gorge dans lesquelles sont disposés des éléments de rembourrage (billes) ou un gel silicone (GB2434301), ou bien sous forme de coque recouverte de silicone pour faire un soutien-gorge adhésif (US 2006 0166602). Dans tous ces cas de cet art antérieur, le TPE n'est pas utilisé en couche contrecollée à une couche adjacente, notamment à une couche textile, en particulier une couche réalisée en maille, et il n'est pas utilisé pour sa capacité à remplacer une armature métallique de soutien-gorge et sa capacité à mettre en forme la poitrine grâce à la conservation de la forme que l'on imprime lors du thermoformage, ceci sans contraindre la poitrine comme le font les thermoplastiques. Par ailleurs on connaît par le document US2002/106970 ou par le document W02004/002248 des TPE utilisés uniquement à titre d'adhésifs mais ces TPE ne sont pas utilisés sous forme de motifs de renforcement.

Le TPE de l'invention est facile à intégrer dans l'empilement de couches contrecollées, car il peut se présenter sous forme de feuilles, plus ou moins souples, continues ou sous forme de grilles ou de filets, qu'on vient disposer aux endroits nécessaires, sur la totalité de l'article en formation ou seulement sur certaines zones. La feuille peut présenter des lumières d'allègement ou structurelles. Le TPE peut servir directement à l'adhérence avec les couches voisines, ou bien celle-ci peut résulter d'une couche de colle additionnelle, soit sous forme de film ou de points. De manière particulièrement avantageuse pour les articles de lingerie, le TPE est apporté en couche perforée ou sous forme de grilles de manière à permettre une bonne aération et une respiration du complexe formé. Avantageusement selon l'invention, les trous dans la couche de TPE ont un diamètre moyen compris entre 1 et 4 mm et de manière encore plus préférée entre 2 et 3 mm. La limite inférieure est choisie pour éviter le rebouchage des trous lors du moulage et la limite supérieure est choisie pour éviter qu'on voie le TPE dans le complexe moulé.

L'invention est particulièrement avantageuse dans le cas d'un complexe monopièce comprenant une couche en textile tridimensionnel (notamment un textile tricoté dit généralement « spacer fabric ») qui peut constituer la couche textile unique ou être associée à une autre couche textile. La couche de TPE est alors avantageusement contrecollée d'un côté à une couche textile simple et de l'autre côté à la couche en textile tridimensionnel. La couche de TPE apporte le soutien et les qualités élastiques, tandis que la couche de textile tridimensionnel renforce le maintien et apporte le confort.

L'invention concerne aussi un procédé de fabrication d'un soutien-gorge selon la revendication 9 annexée.

Le moulage est avantageusement réalisé dans un moule de forme tridimensionnelle, notamment pour un soutien-gorge dans un moule définissant la forme hémisphérique des bonnets, de manière à faire prendre à la couche de TPE cette forme tridimensionnelle qu'il conservera après refroidissement. On peut néanmoins aussi mouler le TPE dans un moule plan ou dans une partie plane d'un moule tridimensionnel, car les avantages qu'il apporte ne sont pas limités aux parties tridimensionnelles ou gauches d'un article de lingerie. De surcroît, on peut aussi coller le TPE à plat grâce au plateau chauffant du moule et le mouler en forme tridimensionnelle grâce au moule-obus ou anatomique pour obtenir un article de lingerie monopièce.

Avantageusement, on réalise le moulage, surtout le moulage en forme tridimensionnelle, en deux étapes, une première étape à une première température entre plateaux plats et une seconde étape à une température supérieure à la première température dans le moule de forme. Cette montée en température par palier permet au TPE de se lier progressivement au couches environnantes et de ne pas se déchirer lors de l'étirement dû au moulage dans le moule de forme.

La première étape et la seconde étape peuvent être accompagnées d'une mise en pression, mais cette pression est surtout utile pour la première étape.

On choisit le TPE approprié à l'utilisation précise recherchée, pour ses caractéristiques de rigidité et d'élasticité et de force de retour, ainsi que sa compatibilité avec les autres fibres généralement utilisées en lingerie, notamment le polyamide (« nylon ») 6 ou le polyamide 6,6 et l'élasthanne.

Avantageusement, on préfère un TPE ayant une température de ramollissement inférieure à 180-190°, voire nettement plus basse, par exemple de l'ordre de 100°C au plus, de manière à nécessiter un faible chauffage de pressage et de moulage et accélérer le processus de fabrication. Dans ce cas, il convient que la colle de contrecollage soit adaptée à cette température basse. De plus, une température relativement basse permet aussi de choisir pour les couches textiles des fibres textiles ayant un point de fusion relativement bas, par exemple des fibres de polyamide 6 au lieu de fibres de polyamide 6.6, ce qui permet de les thermoformer à des températures relativement basses.

Par exemple, on pourra choisir comme TPE de l'EVA en film, dont la température de ramollissement est de 80°C et choisir comme colle une colle à base d'EVA également.

Néanmoins, le TPE préféré selon l'invention est un polyéther-ester, notamment de la marque Hytrel®, qui permet d'obtenir de bonnes qualités de renforcement.

Naturellement, les couches du complexe monopièce peuvent comprendre toutes les couches supplémentaires qui sont déjà couramment employées dans l'art antérieur, et s'étendant sur tout ou partie de la surface du complexe monopièce. Il peut s'agir de couches textiles, de films plastiques, de couche de mousse, ou de couches de matière élastomère telles que du silicone.

La couche de TPE, et les autres couches éventuellement continues, seront perforées pour la respirabilité du complexe et pour moduler les propriétés structurelles apportées par la couche de TPE .

Il est possible d'ajouter une couche de non-tissé.

Il est également possible de placer localement des renforcements de type armatures ou équivalents, et en particulier des renforcements sensiblement rigides, pour la réalisation de soutien-gorge destinés aux fortes poitrines. Néanmoins, l'utilisation de TPE selon l'invention permet de s'affranchir de ces renforts jusqu'à des tailles de poitrines 100E.

Il est aussi possible d'empiler plusieurs couches de TPE pour renforcer certaines zones de l'article.

Les propriétés précédemment décrites de soutien sont plus particulièrement obtenues en choisissant des TPE qui ont des allongements inférieurs à 70% sous une contrainte de 50 N (ceci caractérise la souplesse) et une force de retour à 10% supérieure à 4 N sous une contrainte de 50 N (ceci caractérise la nervosité). L'épaisseur des TPE est choisie suffisante pour obtenir les conditions d'allongement et de force retour souhaitées, mais pas trop grande pour éviter qu'ils ne puissent atteindre leur point de fusion dans un temps de process normal. Du reste, au-delà d'une certaine épaisseur, on risque de conférer au produit une rigidité excessive, sensible au niveau du toucher et du porter.

D'autres caractéristiques et avantages de l'invention ressortiront de la description suivante d'un exemple de réalisation. Il sera fait référence aux dessins annexés sur lesquels :
- la figure 1 est une vue schématique de côté d'un empilement de trois couches d'un complexe conforme à l'invention.
- la figure 2 est une vue schématique de côté du même empilement placé dans une presse et porté à une première température.
- la figure 3 est une vue schématique de côté du même empilement placé dans un moule et porté à une seconde température.
- la figure 4 est une vue schématique de dessus du complexe obtenu dans le moule de la figure 3.
- la figure 5 représente une forme particulière de feuille de TPE utilisable pour une soutien-gorge.
- la figure 6 est un tableau des caractéristiques physiques mesurées sur des tests de complexe textile/TPE de l'invention.
- la figure 7 est une vue schématique d'un moule de thermoformage pour un article conforme à l'invention.

Selon l'exemple de réalisation représenté dans les dessins 1 à 4, on superpose, en vue de former un soutien-gorge monopièce multicouche, trois couches formées d'un textile tridimensionnel 1, d'un TPE 2, et d'un textile tricoté 3.

Pour le textile tridimensionnel 1, encore appelé tissu 3D ou « spacer fabric », il s'agit d'un textile relativement épais mais léger formé par tricotage de deux surfaces textiles reliées par un ou plusieurs monofilaments. On peut se référer notamment aux documents US2004/0097151, US6037035, US6779369 ou W02004/046439 qui donnent des exemples de textiles dimensionnels. Il est en particulier avantageux que grâce à ses constituants, le textile tridimensionnel soit thermoformable. Dans l'exemple choisi, le textile tridimensionnel 3 formera directement la surface intérieure ou la surface extérieure de l'article de lingerie et il s'étend dans ces conditions sur toute la surface dudit article.

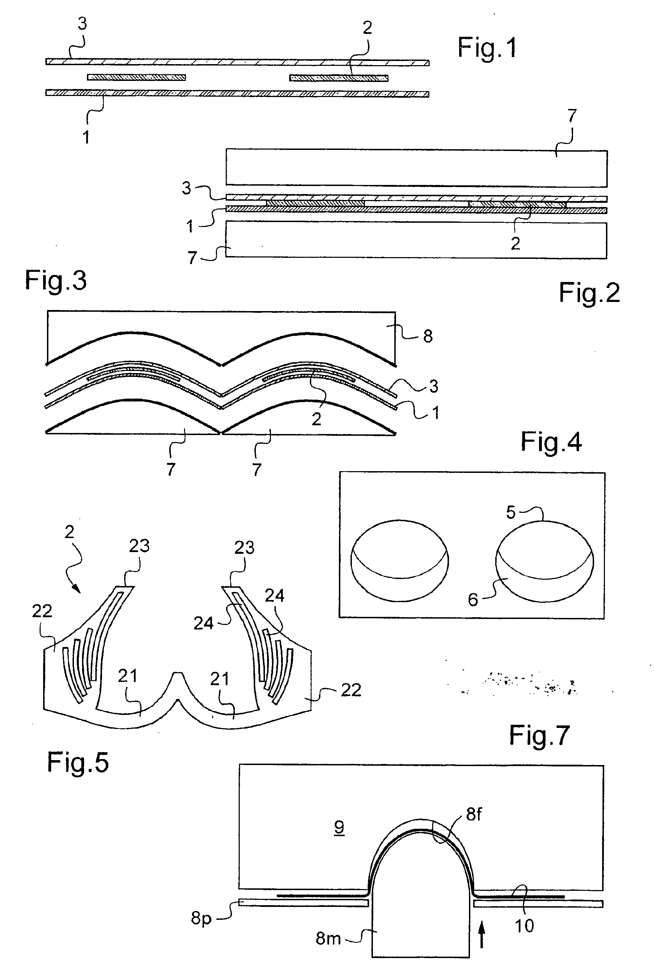

Pour le TPE 2, au contraire, on a choisi de ne prévoir la couche 2 sous forme de motifs de renforcement que dans certaines régions du soutien-gorge, par exemple, dans les parties inférieures 6 des zones qui formeront après moulage les bonnets 5 du soutien-gorge (cf. figure 4). Le TPE choisi, ainsi que son épaisseur, dépend des caractéristiques finales qu'on désire donner au produit : allongement, dureté, résistance à la torsion/flexion/compression. Le cas échéant, entre plusieurs TPE répondant à ces critères, on pourra choisir en fonction de qualités propres du TPE comme par exemple la température de ramollissement... Dans l'exemple représenté, le TPE a une température de transition de l'ordre de 190°C.

Pour la couche de textile tricoté 3, il s'agit dans un exemple de maille jetée de polyamide et d'élasthanne. Il s'agit donc d'un textile élastique.

Les trois couches superposées sont placées entre les plateaux d'une presse 7, où l'ensemble est pressé par exemple 30 s à 180 °C, c'est-à-dire à une température inférieure à la température de ramollissement du TPE, de manière à commencer à ramollir et fusionner le TPE de la couche 2 avec les deux couches voisines.

Dans l'étape suivante représentée à la figure 3, le complexe est disposé entre les deux parties mâle et femelle d'un moule 8 et est moulé par exemple 60s à 200°C. Une pression élevée n'est pas nécessaire et les deux parties du moule peuvent conserver un écartement de moulage pendant l'opération. Le moulage à une température qui dépasse la température de ramollissement du TPE donne à celui-ci un comportement thermoplastique, et le TPE adopte donc la forme imposée par le moule, et conservera cette forme, même après le refroidissement subséquent, par exemple de 30 s. La pièce a donc alors une forme tridimensionnelle moulée où sont formés les bonnets 5 du soutien-gorge, dont la forme est donnée à la fois par la déformation imposée lors du moulage au tissu tridimensionnel 1, mais aussi au TPE 2 présent dans la zone 6 inférieure des bonnets 5.

Le soutien-gorge sera obtenu ensuite par découpe adéquate du complexe moulé, et en apportant les bretelles et les dispositifs d'attache nécessaires.

Ce soutien-gorge présentera dans la région des bonnets un soutien élastique amélioré grâce au TPE qui est exactement conformé à la forme nécessaire au soutien recherché pour les bonnets, c'est-à-dire essentiellement en partie basse des bonnets et éventuellement sur les côtés extérieurs des bonnets.

La figure 5 représente un autre exemple de motif de TPE 2 appliqué pour réaliser un soutien-gorge multicouche. Dans cet exemple, la couche de TPE 2 est sous forme d'une feuille prédécoupée pour former le motif choisi pour le renforcement. Ici, la feuille 2 comprend deux parties arquées inférieures 21 qui vont tenir le rôle d'armature dans le soutien-gorge, et des parties latérales 22 remontant en direction d'un sommet 23 situé au niveau du départ de bretelles du soutien-gorge. Les parties latérales 22 sont allégées par des lumières quasiment verticales 24. Les parties latérales 22 sont destinées à être sur le côté des bonnets du soutien-gorge, et partiellement dans lesdits bonnets.

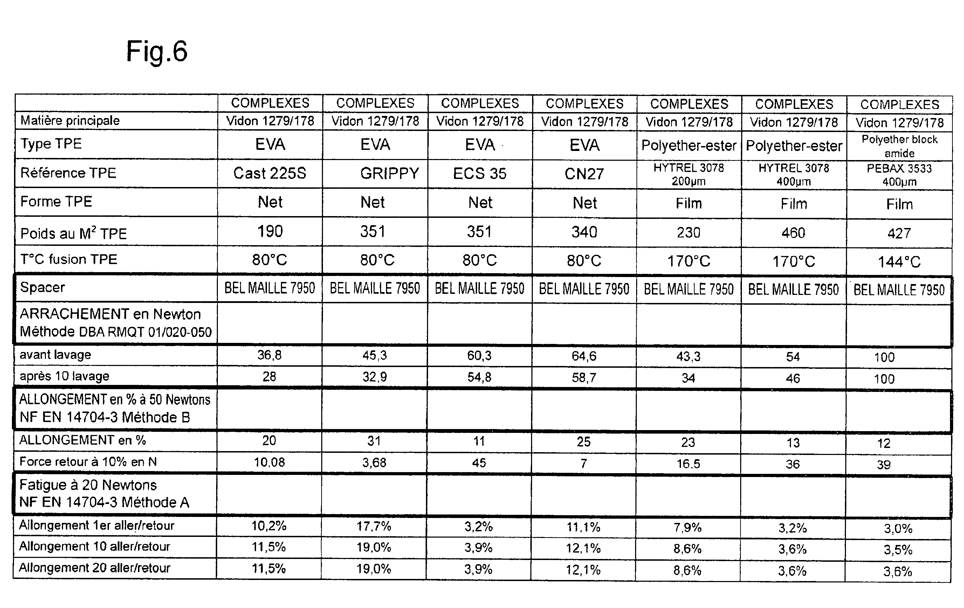

La figure 6 montre un tableau comparatif de différents test réalisés sur des éprouvettes de 50 x 200 mm. Dans chaque cas, on a utilisé la même matière (textile à mailles) Vidon 1279 encollée avec un colle Gygli 178 pour associer un même tissu tridimensionnel (« spacer ») à différents types de TPE : d'une part des EVA se présentant sous la forme de grille (« net ») de différents poids au m², d'autre part des films continus de polyéther-ester de respectivement 200 et 400 µm et un film de polyéther bloc amide de 400 µm. Les résultats montrent d'une part l'arrachement en Newton obtenu par la méthode DBA RMQT 01/020-050, d'autre part les allongements en % à 50 N selon la norme NF EN 14704-3 Méthode B et la fatigue à 20 N selon la norme NF EN 14704-3 Méthode A. Les résultats obtenues avec le polyéther-ester sont particulièrement satisfaisants.

La figure 7 illustre un dispositif de moulage pour les bonnets de soutien-gorge du type selon lequel le moule 8 comporte un moule mâle 8m en forme d'obus pouvant remonter dans un moule femelle 8f formé dans une four 9, et un plateau 8p sur lequel on peut venir charger la pièce 10 à thermoformer quand le moule mâle 8m est en position descendue. La pièce 10 est par exemple un complexe formé de deux couches de textile réunies par un film mince de TPE, par exemple un film de polyéther-ester de marque HYTREL de la société Dupont de 40 µm ou un film de polyéther-bloc-amide de marque PEBAX de la société Arkéma, de 50 µm. Les couches textiles sont des couches réalisées dans un mélange synthétique de grammage inférieur à 200 g/m². Le complexe a éventuellement été préalablement solidarisé à la presse sous chauffage à haute température, par exemple entre 175°C et 200°C, sous une pression de 3 à 5 bars, pendant un certain temps (par exemple entre 30 et 60 secondes). Dans ce cas, le thermoformage se fait dans le moule 8 à une température d'environ 200 °C pendant 30 à 40 secondes, en laissant glisser la matière, c'est-à-dire sans bloquer la matière à la circonférence des moules. Par ailleurs, la remontée du moule mâle 8m dans le moule femelle 8f peut être arrêtée avant le contact de l'un avec l'autre, de manière à éviter que les moules bloquent la matière pendant sa déformation.

Selon une autre possibilité, on peut s'abstenir du complexage préalable en plaçant directement dans le moule 8 les trois constituants de la matière 10 et en thermoformant, en faisant glisser la matière, pendant environ 40 secondes.

Dans tous les cas, le thermoformage conduit à un beau résultat avec un galbe bien formé.

Le même moule et le même procédé, avec ou sans complexage préalable, peuvent être utilisés pour thermoformer un textile majoritairement en coton (par exemple 96% de coton et 4% d'élasthanne) avec un film d'élastomère TPE de 25 µm d'un film de polyéther-bloc-amide de marque PEBAX de la société Arkéma, et permet donc d'obtenir une forme tridimensionnelle moulée à partir d'un textile normale non thermoformable.

## Revendications

1. Soutien-gorge, réalisé par thermoformage d'un empilement de couches contrecollées (1, 2, 3), comprenant au moins une couche textile (1, 3) et au moins une couche en thermoplastique élastomère (2) (TPE) contrecollée à une couche adjacente (1, 3), **caractérisé en ce que** le TPE est choisi et apporté en feuille (2) sous forme d'un motif de renforcement d'une épaisseur comprise entre 100 et 500 µm.

2. Soutien-gorge selon la revendication 2, **caractérisé en ce qu'**une des couches est une couche (1) en textile tridimensionnel.

3. Soutien-gorge selon la revendication 1 ou 2, **caractérisé en ce que** le TPE est apporté en feuille (2) perforée ou à lumières ou en grille.

4. Soutien-gorge selon la revendication 3, **caractérisé en ce que** le TPE est sous forme d'une feuille prédécoupée pour former le motif de renforcement.

5. Soutien-gorge selon la revendication 4, **caractérisé en ce que** la feuille (2) comprend deux parties arquées inférieures (21) tenant le rôle d'armature dans le soutien-gorge, et des parties latérales (22), à lumières (24), situées sur les côtés des bonnets du soutien-gorge et partiellement dans ceux-ci.

6. Soutien-gorge selon l'une quelconque des revendications 1 à 4, **caractérisé en ce que** la couche textile (3) est réalisée en fibres au moins en partie thermoplastiques de manière à être thermoformable.

7. Soutien-gorge selon l'une quelconque des revendications 1 à 6, **caractérisé en ce que** le TPE est un polyéther-ester.

8. Soutien-gorge selon l'une quelconque des revendications 1 à 7, **caractérisé en ce qu'**il est moulé selon une forme tridimensionnelle.

9. Procédé de fabrication d'un soutien-gorge, du type selon lequel on empile des couches (1, 2, 3), comprenant au moins une couche textile (1, 3) et au moins une couche (2) en thermoplastique élastomère (TPE) ayant une température de ramollissement donnée, ces couches empilées étant soumises à l'action de la pression et de la chaleur pour les contrecoller les unes aux autres, au moyen d'une colle et/ou de ladite couche de TPE, les couches étant moulées à une température supérieure à ladite température de ramollissement donnée, puis refroidies, **caractérisé en ce qu'**on choisit le TPE sous forme d'un motif de renforcement d'une épaisseur comprise entre 100 et 500 µm.

10. Procédé selon la revendication 9, **caractérisé en ce que** la température de ramollissement est inférieure à 190°C.

## Claims

1. A bra, produced by thermoforming of a stacking of pasted layers (1, 2, 3), comprising at least one textile layer (1, 3) and at least one layer made of a thermoplastic elastomer (2) (TPE) pasted with an adjacent layer (1,3), **characterized in that** the TPE elastomer is chosen and brought into a sheet (2) in the form of a reinforcement pattern having a thickness ranging between 100 and 500 µm.

2. The bra according to claim 2, **characterized in that** one of the layers is a layer (1) made of a three-dimensional textile.

3. The bra according to claim 1 or 2, **characterized in that** the TPE elastomer is brought into a perforated sheet (2) or a sheet with apertures or like a grid.

4. The bra according to claim 3, **characterized in that** the TPE elastomer is in the form of a pre-cut sheet to form the reinforcement pattern.

5. The bra according to claim 4, **characterized in that** the sheet (2) comprises two lower bowed parts (21) used as a reinforcement part into the bra, and lateral parts (22), with apertures (24), located on the sides of the bra bonnets and partially therein.

6. The bra according to any of claims 1 to 4, **characterized in that** the textile layer (3) is made of at least partly thermoplastic fibers so as to be treated by thermoforming.

7. The bra according to any of claims 1 to 6, **characterized in that** the TPE elastomer is a polyether-ester.

8. The bra according to any of claims 1 to 7, **characterized in that** it is molded according to a three-dimensional form.

9. A method for manufacturing a bra, of the type into which layers (1, 2, 3), comprising at least one textile layer (1, 3) and at least one layer (2) made of a thermoplastic elastomer (TPE) having a given softening temperature, are stacked-up, these stacked-up layers being subjected to the action of pressure and heat to paste them the ones with the others, by means of an adhesive and/or of said TPE layer, the layers being molded at a temperature higher than said given softening temperature, then cooled, **characterized in that** the TPE elastomer is chosen into the form of a reinforcement pattern having a thickness ranging between 100 and 500 µm.

10. The method according to claim 9, **characterized in that** the softening temperature is lower than 190°C.

## Patentansprüche

1. Büstenhalter, hergestellt durch Thermoformen einer Übereinanderlagerung miteinander verklebter Schichten (1, 2, 3), umfassend wenigstens eine textile Schicht (1, 3) und wenigstens eine Schicht aus thermoplastischem Elastomer (2) (TPE), die mit einer angrenzenden Schicht (1, 3) verklebt ist, **dadurch gekennzeichnet, dass** das TPE-Material als Folie (2) in Form eines Verstärkungsmotivs mit einer Dicke, die zwischen 100 und 500 µm beträgt, gewählt und angebracht wird.

2. Büstenhalter nach Anspruch 2, **dadurch gekennzeichnet, dass** eine der Schichten eine Schicht (1) aus dreidimensionalem Textil ist.

3. Büstenhalter nach Anspruch 1 oder 2, **dadurch gekennzeichnet, dass** das TPE-Material als Folie (2) angebracht wird, die perforiert ist, Öffnungen aufweist oder gitterartig ist.

4. Büstenhalter nach Anspruch 3, **dadurch gekennzeichnet, dass** das TPE-Material die Form einer im Voraus zugeschnittenen Folie aufweist, um das Verstärkungsmotiv zu bilden.

5. Büstenhalter nach Anspruch 4, **dadurch gekennzeichnet, dass** die Folie (2) zwei gebogene untere Teile (21), die die Rolle eines Bügels im Büstenhalter einnehmen, und Seitenteile (22) mit Öffnungen (24) umfasst, die sich seitlich der Körbchen des Büstenhalters und teilweise in diesen befinden.

6. Büstenhalter nach einem der Ansprüche 1 bis 4, **dadurch gekennzeichnet, dass** die textile Schicht (3) aus Fasern hergestellt ist, die wenigstens zum Teil thermoplastisch sind, um thermoformbar zu sein.

7. Büstenhalter nach einem der Ansprüche 1 bis 6, **dadurch gekennzeichnet, dass** das TPE-Material ein Polyetherester ist.

8. Büstenhalter nach einem der Ansprüche 1 bis 7, **dadurch gekennzeichnet, dass** er gemäß einer dreidimensionalen Form geformt ist.

9. Herstellungsverfahren eines Büstenhalters, von der Art, wonach Schichten (1, 2, 3) übereinander gelagert werden, umfassend wenigstens eine textile Schicht (1, 3) und wenigstens eine Schicht (2) aus thermoplastischem Elastomer (TPE) mit einer gegebenen Erweichungstemperatur, wobei diese übereinander gelagerten Schichten der Wirkung von Druck und Wärme ausgesetzt werden, um sie miteinander mithilfe eines Klebers und/oder der TPE-Schicht zu verkleben, wobei die Schichten bei einer Temperatur, die höher ist als die gegebene Erweichungstemperatur, geformt, dann abgekühlt werden, **dadurch gekennzeichnet, dass** das TPE-Material in Form eines Verstärkungsmotivs mit einer Dicke, die zwischen 100 und 500 µm beträgt, gewählt wird.

10. Verfahren nach Anspruch 9, **dadurch gekennzeichnet, dass** die Erweichungstemperatur niedriger als 190°C ist.
